(19) 

**Europäisches Patentamt**

**European Patent Office**

**Office européen des brevets**

(11) **EP 4 625 751 A1**

(12) **EUROPEAN PATENT APPLICATION**

(43) Date of publication:
**01.10.2025 Bulletin 2025/40**

(21) Application number: **24166246.9**

(22) Date of filing: **26.03.2024**

(51) International Patent Classification (IPC):
*H02J 7/00* (2006.01)

(52) Cooperative Patent Classification (CPC):
**H02J 7/0063; H02J 7/0047**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Instagrid GmbH
71636 Ludwigsburg (DE)**

(72) Inventor: **Gutknecht, Philipp
Mönsheim (DE)**

(74) Representative: **Eisenführ Speiser
Patentanwälte Rechtsanwälte PartGmbB
Postfach 10 60 78
28060 Bremen (DE)**

(54) **SYSTEMS AND METHODS FOR CONTROLLING OPERATIONS OF AN ENERGY SUPPLY**

(57)     Systems, methods and software products for operating a circuit, comprising: obtaining a time series of voltage measurements for an output of the circuit and a time series of current measurements for the output or an input of the circuit; respectively combining the voltage measurements and the current measurements to obtain a plurality of power values; computing a mean power over a sliding sample window using the plurality of power values; and selectively controlling operations of at least one electronic component of the circuit based on a sign and a numerical value of the mean power.

FIG. 5

**Description**

BACKGROUND

Description of the Related Art

Battery cell packs are often used to power electronic devices. Different combinations of the battery cell packs are used to provide different output voltages.

SUMMARY

The present disclosure concerns implementing systems and methods for operating a circuit. The methods comprise: obtaining a time series of voltage measurements for an output of the circuit and a time series of current measurements for the output or an input of the circuit; respectively combining the voltage measurements and the current measurements to obtain a plurality of power values; computing a mean power over a sliding sample window using the plurality of power values; and selectively controlling operations of at least one electronic component of the circuit based on a sign and a numerical value of the mean power.

The present disclosure also concerns a power supply. The power supply comprises: at least one electronic component configured to selectively transition between an open state and a closed state; and a circuit. The circuit is configured to perform the following operations: obtaining a time series of voltage measurements for an output of the power supply and a time series of current measurements for the output or an input of the power supply; respectively combining the voltage measurements and the current measurements to obtain a plurality of power values; computing a mean power over a sliding sample window using the plurality of power values; and selectively controlling operations of the at least one electronic component based on a sign and a numerical value of the mean power.

BRIEF DESCRIPTION OF THE DRAWINGS

The present solution will be described with reference to the following drawing figures, in which like numerals represent like items throughout the figures.

FIG. 1A provides a schematic diagram of an example energy storage module, according to some non-limiting embodiments or aspects.

FIG. 1B provides an illustrative block diagram of a circuit in the energy storage module.

FIG. 1C provides a circuit diagram of an energy storage module, according to some non-limiting embodiments or aspects.

FIG. 1D provides a perspective view of an energy storage module.

FIG. 1E provides an illustrative circuit diagram for the transistor active bridge circuit. FIGS. 1A-1E are collectively referred to as "FIG. 1".

FIGS. 2A-2C (collectively referred to as "FIG. 2") are schematic diagrams of an example energy storage module container of energy storage modules, according to some non-limiting embodiments or aspects.

FIGS. 3A and 3B (collectively referred to as "FIG. 3") are schematic diagrams of an example power supply system, according to some non-limiting embodiments or aspects.

FIG. 4 is a circuit diagram of an example power supply system, according to some non-limiting embodiments or aspects.

FIG. 5 provides a block diagram of a circuit for controlling operations of a power supply system based on computed active power.

FIGS. 6-8 provide graphs that are useful for understanding operations of the circuit shown in FIG. 5.

FIG. 9 provides a flow diagram of an illustrative method for operating a circuit.

DETAILED DESCRIPTION

The present solution is described with reference to the attached figures. The figures are not drawn to scale and they are provided merely to illustrate the instant solution. Several aspects of the present solution are described below with reference to example applications for illustration. It should be understood that numerous specific details, relationships, and methods are set forth to provide a full understanding of the present solution. One having ordinary skill in the relevant art, however, will readily recognize that the present solution can be practiced without one or more of the specific details or with other methods. In other instances, well-known structures or operations are not shown in detail to avoid obscuring the present solution. The present solution is not limited by the illustrated ordering of acts or events, as some acts may occur in different orders and/or concurrently with other acts or events. Furthermore, not all illustrated acts or events are required to implement a methodology in accordance with the present solution.

It should also be appreciated that the terminology used herein is for the purpose of describing particular embodiments only and is not intended to be limiting of the present solution. As used herein, the singular forms "a", "an" and "the" are intended to include the plural forms as well, unless the context clearly indicates otherwise. Furthermore, to the extent that the terms "including", "includes", "having", "has", "with", or variants thereof are used in either the detailed description and/or the claims, such terms are intended to be inclusive in a manner similar to the term "comprising."

Further, unless otherwise defined, all terms (including technical and scientific terms) used herein have the same meaning as commonly understood by one of ordinary skill in the art to which this solution belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As noted above, conventional manufacturing processes of battery cell devices are relatively manually intensive, inefficient, time consuming and costly. Thus, there is a need for a battery cell design that facilitates an improved manufacturing process. The present solution is directed to a novel temperature sensor design that allows for an improved manufacturing process for battery devices with a cell temperature monitoring feature.

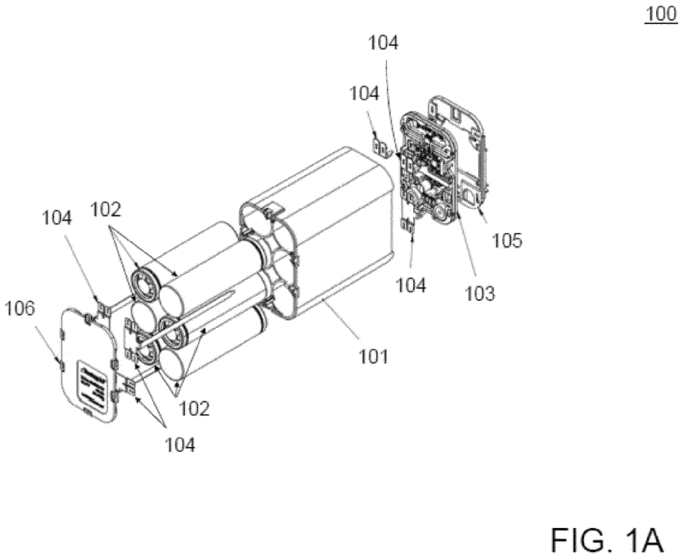

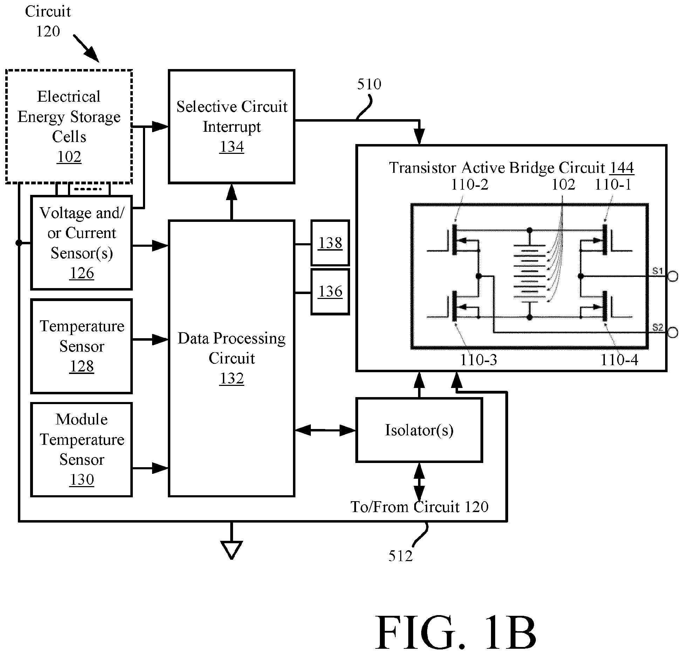

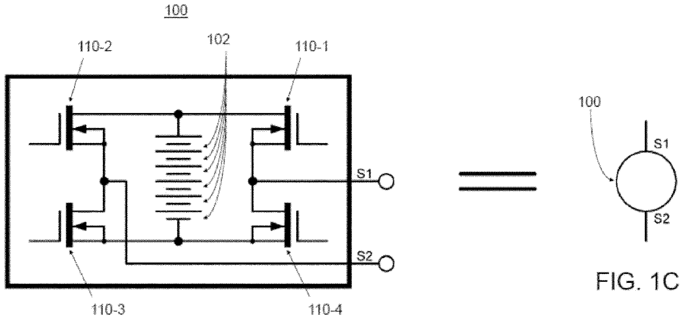

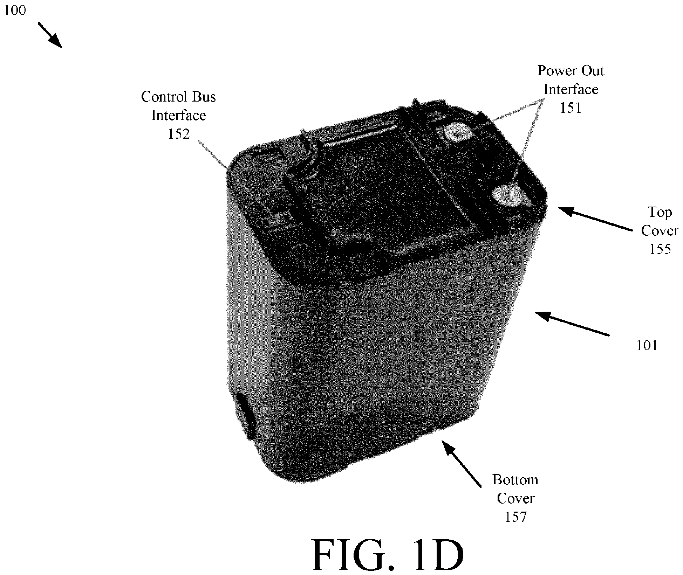

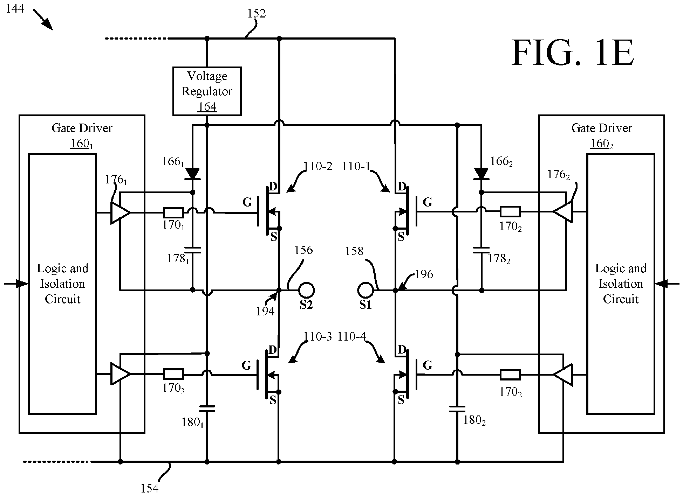

Referring now to FIG. 1A, depicted is a schematic diagram of an example energy storage module **100,** according to some non-limiting embodiments or aspects. As shown in FIG. 1, energy storage module **100** may include housing **101,** at least one energy storage component **102,** module controller **103,** connectors **104,** top cover **105,** and bottom cover **106.** The number and arrangement of components shown are provided as an example. In some non-limiting embodiments or aspects, energy storage module **100** may include additional components, fewer components, different components, or differently arranged components than those shown. Additionally or alternatively, a set of components (e.g., one or more components) of energy storage module **100** may perform one or more functions described as being performed by another set of components of energy storage module **100.**

In some non-limiting embodiments or aspects, housing **101** may include plastic, metal, any combination thereof, and/or the like. For example, housing **101** may include a plastic housing.

In some non-limiting embodiments or aspects, housing **101** may be configured to hold at least one (e.g., a plurality of) energy storage components **102.** For example, as shown in FIG. 1, housing **101** may be shaped to have six energy storage components **102** uniformly distributed in an interior space defined by housing **101.**

In some non-limiting embodiments or aspects, each energy storage component **102** may include at least one of a battery, a rechargeable battery (e.g., a lithium-ion battery), a cell (e.g., battery cell, an electrochemical cell, and/or the like), a rechargeable cell, a capacitor, an ultra-capacitor, any combination thereof, and/or the like. For example, as shown in FIG. 1, each energy storage component **102** may include a cylindrical cell (e.g., lithium-ion battery cell).

In some non-limiting embodiments or aspects, module controller **103** may include a controller and associated circuitry. Optionally, module controller **103** may include a microcontroller, a computing device, a processor, a microprocessor, a digital signal processor (DSP), and/or any processing component (e.g., a field-programmable gate array (FPGA), an application-specific integrated circuit (ASIC), etc.) that can be configured to perform at least one function.

In some non-limiting embodiments or aspects, connectors **104** may connect the terminals (e.g., ends) of each energy storage component **102** to module controller **103.** Additionally or alternatively, at least one connector **104** may connect at least one terminal (e.g., end) of one energy storage component **102** to another terminal of another energy storage component **102.** For example, connectors **104** may include a conductive (e.g., electrically conductive) material, such as metal and/or the like. In some non-limiting embodiments or aspects, some or all of the connectors **104** may be used for energy storage component **102** (e.g., cell) voltage measurements.

In some non-limiting embodiments or aspects, each of top cover **105** and bottom cover **106** may include plastic, metal, any combination thereof, and/or the like. For example, each of top cover **105** and bottom cover **106** may include a plastic cover. In some non-limiting embodiments or aspects, top cover **105** and bottom cover **106** may be configured to (e.g., sized and shaped to) cover openings at top and bottom ends, respectively, of housing **101.** In some non-limiting embodiments or aspects, top cover **105** may include a first electrical connection (e.g., **S1,** as described herein), a second electrical connection (e.g., S2, as described herein), and/or at least one communication connection, as described herein.

For example, these connections may allow for electrical and/or communicative connection between module controller **103** and external components (e.g., other components of the power supply system external to the energy storage module housing).

In some non-limiting embodiments or aspects, energy storage module **100** may include a battery module. For example, the battery module may include at least one energy storage component (e.g., a battery cell, such as a rechargeable battery cell). For the purpose of illustration, as shown in FIG. 1A, the battery module may include six energy storage components (e.g., rechargeable battery cells, such as lithium-ion cells, supercapacitors, and/or the like).

In some non-limiting embodiments or aspects, energy storage components **102** (e.g., battery cells) of energy storage module **100** may be connected in series. In some non-limiting embodiments or aspects, energy storage components **102** (e.g., battery cells) of energy storage module **100** may be connected in parallel.

In some non-limiting embodiments or aspects, at least some (e.g., a subset of) energy storage components **102** may be connected in series, for example, so that the combined (e.g., summed and/or the like) voltage of the series-connected components satisfies (e.g., equals, exceeds, and/or the like) the target (e.g., desired) operating voltage of energy storage module **100.** In some non-limiting embodiments or aspects, at least some (e.g., a subset of) energy storage components **102** may be connected in parallel, for example, so that the combined (e.g., summed and/or the like) capacity (e.g., current) of the parallel-connected components satisfies (e.g., equals, exceeds, and/or the like) the target (e.g., desired) a target capacity (e.g., operating current of energy storage module **100**). For example, energy storage module **100** may include a plurality of subsets of energy storage components **102** such that energy storage components **102** of each subset are connected in series (e.g., to combine to output the desired module voltage), and the subsets may be connected in parallel (e.g., to combine to output the desired module current).

In some non-limiting embodiments or aspects, energy storage module **100** may be the same as or similar to or include at least some components that are the same as or similar to the battery modules described in at least one of U.S. Patent Application Pub. No. 2022/0037891, U.S. Patent Application Pub. No. 2022/0247030, U.S. Patent Application Pub. No. 2022/0359918, and/or U.S. Patent Application Pub. No. 2022/0360094, the disclosures of each of which are hereby incorporated by reference in their entireties.

As shown in FIG. 1B, a circuit **120** of the energy storage module **100** comprises voltage and optionally, current sensors **126** connected to the energy storage components **102**. These sensors **126** are configured to measure the voltage and/or current of each energy storage component. Circuit **120** also comprises temperature sensors **128** and a module temperature sensor **130** Each temperature sensor **128** is configured to measure a temperature of one or more energy storage components, while the module temperature sensor **130** is configured to measure an internal temperature of the energy storage module. These sensor measurements are communicated from the sensors **126, 128, 130** to the data processing circuit **132** for processing. The data processing circuit **132** can perform operations to communicate sensor measurements as sensor data to the module controller **103** or an external circuit, and/or perform operations to analyze the sensor measurements to determine if certain criteria is met. For example, if a parameter measurement falls outside of defined range at a given time or for a certain amount of time, then the data processing circuit **132** causes the selective circuit interrupt **134** to transition from a closed state to an open state such that the energy storage module **100** is turned off. The parameter measurement can include a voltage measurement, a current measurement or a temperature measurement.

The data processing circuit **132** may be configured to access datastore(s) **136.** Datastore(s) **136** can comprise computer-readable storage medium on which is stored one or more sets of instructions configured to implement one or more of the methodologies, procedures, or functions described herein. The instructions can also reside, completely or at least partially, within the data processing circuit **132** during execution thereof by the data processing circuit **132.** Datastore(s) **136** and data processing circuit **132** also can constitute machine-readable media. The term "machine-readable media", as used here, refers to a single medium or multiple media (e.g., a centralized or distributed database, and/or associated caches and servers) that store the one or more sets of instructions. The term "machine-readable media", as used here, also refers to any medium that is capable of storing, encoding or carrying a set of instructions for execution by the data processing circuit **132** and that cause the data processing circuit **132** to perform any one or more of the methodologies of the present disclosure. Data processing circuit **132** can include, but is not limited to, processor(s).

Circuit **120** also comprises a transistor active bridge circuit **144.** The transistor active bridge circuit **144** comprises at least one switching element (e.g., first switching element **110-1,** second switching element **110-2,** third switching element **110-3,** and/or fourth switching element **110-4,** collectively referred to as "switching elements **110,"** and individually referred to as "switching element **110**"), first electrical connection **S1,** and second electrical connection **S2.**

In some non-limiting embodiments or aspects, switching elements **110** may be part of (e.g., integrated on, connected to, and/or the like) module controller **103**. In some non-limiting embodiments or aspects, first electrical connection **S1** and/or second electrical connection **S2** may be part of (e.g., integrated on, connected to, and/or the like) module controller **103** and/or may extend through top cover **105.** The number and arrangement of components shown are provided as an example. In some non-limiting embodiments or aspects, energy storage module **100** may include additional components, fewer components, different components, or differently arranged components than those shown.

Additionally or alternatively, a set of components (e.g., one or more components) of energy storage module **100** may perform one or more functions described as being performed by another set of components of energy storage module **100**.

As shown in the example in FIG. 1B, energy storage module **100** may include six energy storage components **102** (e.g., rechargeable battery cells and/or the like) connected in series. In some non-limiting embodiments or aspects, energy storage components **102** may be in other arrangements and/or have other connections, as described herein.

In some non-limiting embodiments or aspects, switching elements **110** may be switched (e.g., opened, closed, activated, deactivated, and/or the like) to selectively connect energy storage component(s) **102** to first electrical connection **S1** and/or second electrical connection **S2**, e.g., to control a module voltage across first electrical connection **S1** and second electrical connection **S2**. For example, switching elements **110** may be switched so that (1) first electrical connection **S1** and second electrical connection **S2** are both connected to negative side (e.g., DC minus) of energy storage component(s) **102**, (2) first electrical connection **S1** is connected to the negative side (e.g., DC minus) of energy storage component(s) **102** and second electrical connection **S2** is connected to the positive side (e.g., DC plus) of energy storage component(s) **102**, or (3) first electrical connection **S1** is connected to the positive side (e.g., DC plus) of energy storage component(s) **102** and second electrical connection **S2** is connected to the negative side (e.g., DC minus) of energy storage component(s) **102**. As such, the voltage across first electrical connection **S1** and second electrical connection **S2** may be zero, negative, or positive, respectively.

For the purpose of illustration by way for a few examples, to connect both first electrical connection **S1** and second electrical connection **S2** to the negative side (e.g., DC minus) of energy storage component(s) **102**, fourth switching element **110-4** and third switching element may both be activated (e.g., closed, set to act as a closed switch, and/or the like), while second switching element **110-2** and first switching element **110-1** are deactivated (e.g., open, set to act as an open switch, and/or the like). To connect first electrical connection **S1** to the negative side (e.g., DC minus) and connect second electrical connection **S2** to the positive side (e.g., DC plus) of energy storage component(s) **102**, fourth switching element **110-4** and second switching element **110-2** may be activated, while third switching element **110-3** and first switching element **110-1** are deactivated. To connect first electrical connection S1 to the positive side (e.g., DC plus) and second electrical connection **S2** to the negative side (e.g., DC minus) of energy storage component(s) **102**, first switching element **110-1** and third switching element **110-3** may be activated, and fourth switching element **110-4** and second switching element **110-2** may be deactivated. In some non-limiting embodiments or aspects, the switching elements **110** may be operated to be in states such as: a high-impedance (Hi-Z) state (e.g., in which all of the switching elements **110** are deactivated), a bypass state (e.g., in which the low-side switching elements **110-3** and **110-4** are activated while the high-side switching elements **110-1** and **110-2** are deactivated), and two polarity states (e.g., in which the energy storage component(s) **102** are connected between the first electrical connection **S1** and the second electrical connection **S2** in opposite polarity manner).

In some non-limiting embodiments or aspects, each switching element **110** may include at least one of a transistor (e.g., bipolar transistor, field-effect transistor (FET), metal-oxide-semiconductor field-effect transistor (MOSFET), and/or the like), a switch, a contactor, any combination thereof, and/or the like. In some non-limiting embodiments or aspects, the energy storage module **100** may include one or more driver circuits, such as a gate driver circuit, for driving each switching element **110**. For example, the driver circuits may be part of (e.g., integrated on, connected to, and/or the like) module controller **103**.

In some non-limiting embodiments or aspects, each switching element **110** may be driven, or controlled, via the module controller **103**. For example, module controller **103** may control the switching elements **110** to selectively connect energy storage component(s) **102** to first electrical connection **S1** and/or second electrical connection **S2**, as described herein. For example, module controller **103** may be connected to each switching element **110** in order to drive, or optionally control, such switching element **110**. In some non-limiting embodiments or aspects, the module controller **103** provides signals to the gate driver circuit for driving the switching elements **110**.

As shown in FIG. 1C, each energy storage module 100 may be represented by the symbol shown in FIG. 1C (e.g., for brevity and clarity of the following drawings).

FIG. 1D provides an illustration of an energy storage module **100**. An assembly view of the energy storage module **100** is provided in FIG. 1A. Energy storage module **100** comprises a housing **101** in which energy storage components **102** are housed so as to maintain certain positions relative to each other. The energy storage components **102** can be arranged in two rows of three energy storage components as shown in FIG. 1A. The present solution is not limited in this regard. The energy storage components can have a different arrangement than that shown in FIG. 1A. Any number of energy storage components can be provided in the energy storage module in accordance with a given application. Each energy storage component may include, but is not limited to, a lithium-ion cell. The lithium-ion cell may have a cylindrical shape as shown or another shape (e.g., a rectangular shape) not shown.

A top cover **155** and a bottom cover **157** are provided for the housing **101**. The covers **155, 157** may be configured to provide an environment seal with the housing **101**. The environmental seal may be facilitated by gaskets (not visible or shown in FIG. 1D and/or FIG. 1A) compressed between the covers **155, 157** and the housing's sidewalls.

The safe and reliable operation of the energy storage module **100** requires the constant monitoring of each energy storage component **102,** e.g., to detect when its current (optional), voltage and/or temperature fall outside of defined operating range(s). This monitoring is achieved using a circuit **120** that is also housed in the housing **101.** Conductive terminals **104** are provided to connect the energy storage components **102** to the circuit **120** for at least voltage measurements.

As shown in FIG. 1E, the transistor active bridge circuit **144** comprises gate drivers **160₁, 160₂,** a voltage regulator **164,** diodes **166₁, 166₂** (collectively referred to as **"166"**), optional resistors **170₁, 170₂, 170₃, 170₄** (collectively referred to as **"170"**), capacitors **178₁, 178₂, 180₁, 180₂,** and a transistor active bridge **144.** The transistor active bridge circuit **144** is supplied a voltage waveform from the energy storage components **102.** As such, the transistor active bridge circuit **144** is connected to energy storage components **102** via input lines **152, 154.** Input line **152** may be referred to as a high input line, while input line may be referred to as a low input line **154.** The transistor active bridge circuit **144** is also connected between a pair of output lines **156, 158.** The output lines **156, 158** are connected to the power interface **151** of FIG. 1D.

The transistor active bridge circuit **144** includes a plurality of switches, shown in this example as field-effect transistors (FETs) **110-2, 110-3, 110-1, 110-4** of an N-channel type. Each of the FETs may comprise a metal-oxide semiconductor FET (MOSFET), but other types of switches or FETs (e.g., insulated gate bipolar transistors (IGBTs), bipolar junction transistors (BJTs), gate turn-off thyristors (GTOs) or their likes or combinations) instead of the shown type can also be contemplated. Each FET **110-2, 110-3, 110-1, 110-4** has three (3) terminals respectively defined as a source **S,** a gate **G** and a drain **D.** An electrical path is be provided from the source to the drain of each FET **110-2, 110-3, 110-1, 110-4.** This path is generally referred to herein as the source-drain path. A source-drain path of first FET **110-2** is connected in series with a source-drain path of the second FET **110-3.** The series connected transistor pair **110-2, 110-3** form a first series transistor combination that is connected across the input lines **152, 154.** A source-drain path of the third FET **110-1** is connected in series with a source-drain path of the fourth FET **110-4** to form a second series transistor combination connected across the input lines **152, 154.**

The transistor active bridge circuit **144** can have an output defined by output lines **156, 158.** A first one of the output lines **156** can be connected to the first series combination **110-2/110-3** at an interconnection point **194** between the first and the second field-effect transistors **110-2, 110-3.** A second one of the output lines **158** can be connected to the second series combination **110-1/110-4** at an interconnection point **196** between the third and fourth field-effect transistors **110-1, 110-4.**

Gate driver **160₁** is provided for driving the gate **G** of each FET **110-2, 110-3.** Similarly, gate driver **160₂** is provided for driving the gate **G** of each FET **110-1, 110-4.** In this regard, the gate drivers are configured to supply a voltage to the gate **G** of each respective FET at certain times for switching the FET to its "on" state or "off" state. The gate drivers are also configured to stop supplying the voltage to the gate **G** of the FET at certain times for switching the FET to its "on" state or "off" state. Gate driver circuits are well known. Known or to be known gate driver circuit can be used here.

When the gate drivers communicate gate control signals to the FETs, the FETs **110-2, 110-3, 110-1, 110-4** will be biased and switch to their "on" states. In effect, current will flow between the drain **D** and source **S** of these FETs. The FETs transition back to their "off" states when the gate control signals are no longer being output from the gate drivers. The gate drivers are configured to prevent the two FETs in each series pair **110-2/110-3** and **110-1/110-4** from being closed simultaneously or concurrently.

The FETs are switched alternatively by the gate driver to provide a certain power output across lines **156, 158.** For example, when the energy storage module is in its "on" state, one of the high side FETs **110-2, 110-1** is transitioned to its "on" state for a given period of time (e.g., 1 microsecond (μs) - 15 milliseconds (ms), as some further non-limiting examples, a few microseconds (μs), 10 μs, 20 μs, 50 μs, 0.1 ms, 2 ms, 5 ms, or even 10 ms). When the energy storage module is in its "off" state, the two high side FETs **110-2, 110-1** are in their "off" states and the two low side FETs **110-3, 110-4** are in their "on" states. In effect, the two low side FETs are conducting while the two high side FETs are not conducting.

The capacitors **178** are provided to store charge for driving the respective FETs **110-2, 110-4.** The respective capacitor **178** is chargeable via their respective diode **166.** In this regard, the supply voltage for the high-side gate driver output stages **176₁, 176₂** is stored in capacitors **178₁, 178₂.** Each of the capacitors **178₁, 178₂** is recharged when the corresponding output line **156, 158** is slewing towards the low supply line **154,** e.g., when the corresponding low side FETs **110-3** or **110-4** is switched to the "on" state. For example, when FET **110-3** is turned "on", the potential at output **S2** is pulled towards the potential at source S of FET **110-3.** At this time, diode **166₁** becomes conductive such that current flows from the voltage regulator **164** through capacitor **178₁** and transistor **110-3** to line **154.** In effect, capacitor **178₁** is recharged as the current flows therethrough. When the potential at output **S2** is slewing towards the high supply line **152,** the diode **166₁** acts as a blocking diode such that charge on the capacitor **178₁** is prevented from flowing back towards the voltage regulator **164.** Thus, charged capacitor **178₁** supplies voltage is supplied from the capacitor **178₁** to the high-side gate driver output stage **176i** for driving the gate terminal of FET **110-2.** At some point, the capacitor will be discharged to a level which may cause the gate driver **160₁** to enter an undervoltage mode in which the gate driver is not operational anymore. The capacitor is recharged before it reaches this level of discharge. An advantage of the preset teachings is that switching of the low-side FETs **110-3, 110-4** can be used to simultaneously charge their corresponding capacitor **178** which is used for driving the high-side FETs **110-2, 110-1.**

It is rather common in gate driver circuits to use charge pumps or transformer isolated (e.g., multi-channel) DC-DC converters to facilitate power supply system to the gate driver(s). These circuits tend to be relatively expensive. As evident from FIG. 1E, circuit **144** is absent of any charge pumps and therefore is less costly than conventional transistor active bridge circuits. The elimination of the charge pumps was achieved using circuit components **166, 178** to provide the voltage for the high-side gate driver output stages **176** in a controlled manner to avoid or minimize the likelihood that the gate driver **160$_1$** enters an undervoltage mode.

Capacitors **180$_1$, 180$_2$** has a similar role as capacitors **178$_1$, 178$_2$**. However, capacitors **180$_1$, 180$_2$** are permanently supplied a voltage signal by the voltage regulator **164**. As such, the low-side FETs **110-3, 110-4** can be turned "on" for as long as desired. When low-side FET **110-3** is in its "on" state, the potential at output **S2** is equal to the potential at source S of FET **110-3**. Likewise, the potential at output **S1** is equal to the potentiation at source S of FET **110-4** when the FET is in its "on" state.

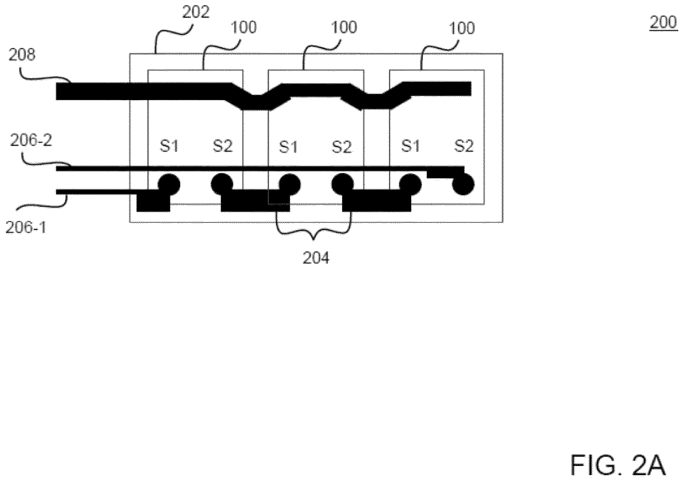

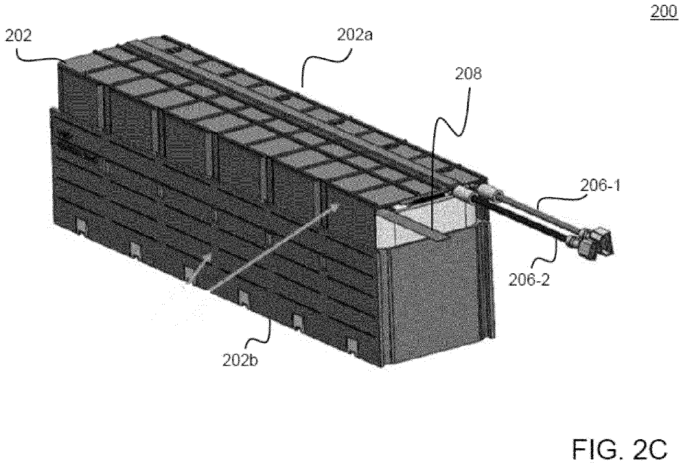

In some non-limiting embodiments or aspects, housing **202** may be configured to hold at least one (e.g., a plurality of, a set of, and/or the like) energy storage modules **100**. For example, as shown in FIG. 2A, housing **202** may be shaped to have three energy storage modules **100** uniformly distributed in an interior space defined by housing **202**. In some non-limiting embodiments or aspects, there may be any number of energy storage modules **100,** as described herein. For example, housing **202** may contain six energy storage modules **100,** nine energy storage modules **100,** twelve energy storage modules **100,** and/or the like.

In some non-limiting embodiments or aspects, bar connections **204** may connect energy storage modules **100** within housing **202**. For example, as shown in FIG. 2A, a first (e.g., left) bar connection **204** may connect second electrical connection **S2** of a first (e.g., left) energy storage module **100** to first electrical connection **S1** of a second (e.g., center) energy storage module **100,** and a second (e.g., right) bar connection **204** may connect second electrical connection **S2** of the second (e.g., center) energy storage module **100** to first electrical connection **S1** of a third (e.g., right) energy storage module **100**. As such, these energy storage modules **100** may be connected in series. In some non-limiting embodiments or aspects, energy storage modules 100 and/or bar connections **204** may be in other arrangements and/or have other connections (e.g., to connect energy storage modules **100** in series, in parallel, a combination of series and parallel connections, and/or the like, as described herein). In some non-limiting embodiments or aspects, bar connections **204** may include a conductive (e.g., electrically conductive) material, such as metal and/or the like.

In some non-limiting embodiments or aspects, electrical connections **206** may include a conductive (e.g., electrically conductive) material, such as metal and/or the like. For example, electrical connections **206** may include a wire, a cable, and/or the like. In some non-limiting embodiments or aspects, electrical connections **206** may allow for electrical connection between energy storage module container **200** (e.g., energy storage modules **100** within energy storage module container **200**) and external components (e.g., other components of the power supply system external to housing **202**).

In some non-limiting embodiments or aspects, first electrical connection **206-1** may be connected to first electrical connection **S1** of at least one energy storage module **100**. For example, first electrical connection **206-1** may be connected to first electrical connection **S1** of a first (e.g., left) energy storage module **100** (e.g., of a group of energy storage modules **100** connected in series). In some non-limiting embodiments or aspects, second electrical connection **206-2** may be connected to second electrical connection **S2** of at least one energy storage module **100**. For example, second electrical connection **206-2** may be connected to second electrical connection **S2** of a last (e.g., right) energy storage module **100** (e.g., of a group of energy storage modules **100** connected in series).

In some non-limiting embodiments or aspects, communication connection **208** may include at least one component that permits communication among other components. For example, communication connection **208** may include a bus connection (e.g., digital bus, such as controller area network bus (CAN-bus), isolated serial port Interface (isoSPI), any derivatives thereof, any combination thereof, and/or the like). In some non-limiting embodiments or aspects, communication connections **208** may allow for communicative connection between container energy storage modules **100** within energy storage module container **200** (e.g., module controllers **103** of such energy storage modules **100**) and external components (e.g., other components of the power supply system external to housing **202,** such as a system controller and/or the like). The system controller may provide a signal (e.g., command) via communication connection **208** to any of module controllers **103** for operating the switching elements **110** thereof (e.g., via one or more gate driver circuits) in a particular (e.g., controlled) manner.

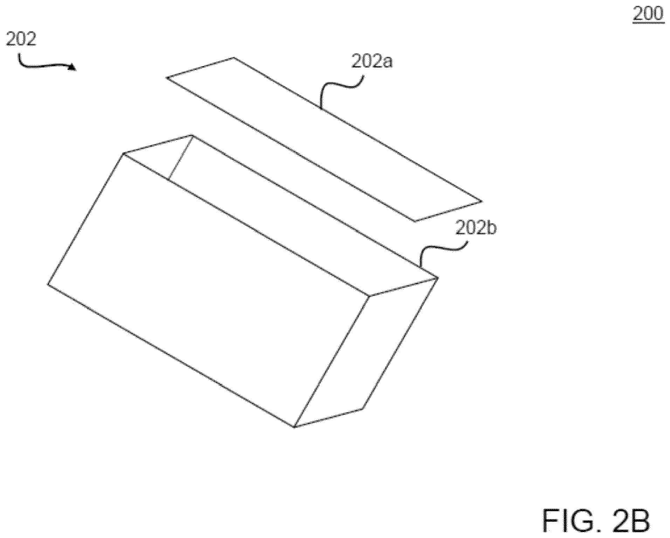

FIGS. 2B-2C provide schematic diagrams of an example energy storage module container 200 of energy storage modules, according to some non-limiting embodiments or aspects. As shown in FIGS. 2A-2C, energy storage module container **200** may include at least one energy storage module **100** (e.g., a plurality or energy storage modules **100,** a set of energy storage modules **100,** and/or the like of), housing **202** (e.g., including top cover **202a** and holder **202b),** bar connections **204,** first electrical connection **206-1** and second electrical connection **206-2** (collectively referred to as "electrical connections **206"** and individually referred to as "electrical connection **206"),** and/or communication connection **208**. The number and arrangement of components shown are provided as an example. In some non-limiting embodiments or aspects, energy storage module container **200** may include additional components, fewer components, different components, or differently arranged components than those shown. Additionally or alternatively, a set of components (e.g., one or more components) of energy storage module container **200** may perform one or more functions described as being performed by another set of components of energy storage module container **200.**

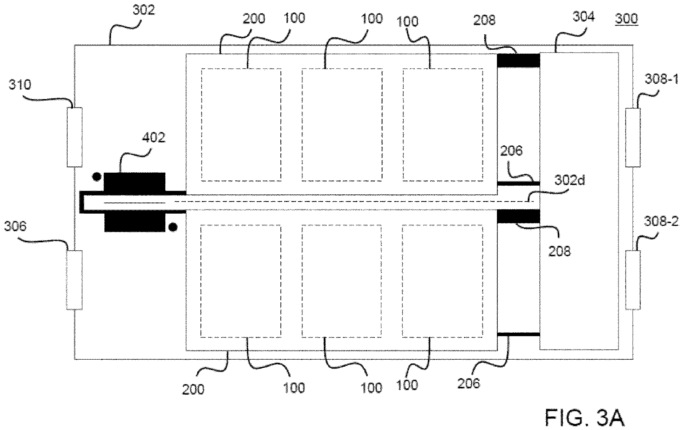

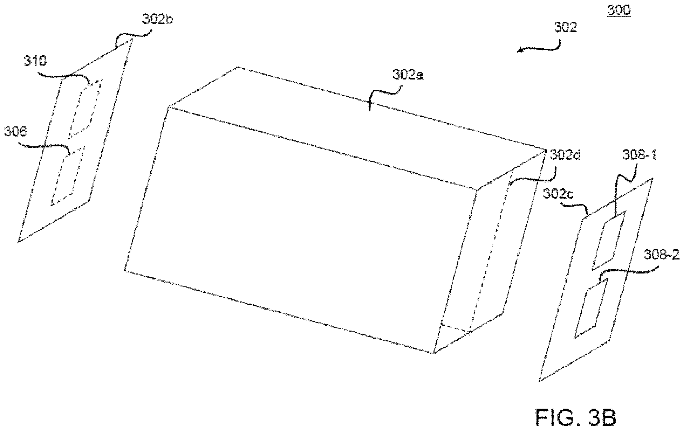

Referring now to FIGS. 3A and 3B, shown are schematic diagrams of an example electrical power system, shown here as a power supply system **300,** according to some non-limiting embodiments or aspects. As shown in FIGS. 3A and 3B, power supply system **300** may include at least one energy storage module container **200** (e.g., each including at least one energy storage module **100**), electrical connections **206,** communication connections **208,** housing **302,** system controller **304,** input connection **306,** at least one output connection (e.g., first output connection **308-1** and/or second output connection **308-2,** collectively referred to as "output connections **308,"** and individually referred to as "output connection **308"**), and/or choke **402.** In some non-limiting embodiments or aspects, power supply system **300** may also include communication connection **310.** For brevity and clarity, electrical connections **206** and communication connections **208** inside energy storage module container **200** are not shown in FIG. 3A, but energy storage module(s) **100** may be connected to electrical connections **206** and/or communication connections **208,** as described herein. For brevity and clarity, connections between energy storage module container **200** (and/or energy storage module(s) **100** thereof) and input connection **306,** output connection(s) **308,** and/or communication connection **310** are not shown in FIG. 3A, but energy storage module container **200** (and/or energy storage module(s) **100** thereof) may be connected to input connection **306,** output connection(s) **308,** and/or communication connection **310,** as described herein. For brevity and clarity, connections between system controller **304** and input connection **306,** output connection(s) **308,** and/or communication connection **310** are not shown in FIG. 3A, but system controller **304** may be connected to input connection **306,** output connection(s) **308,** and/or communication connection **310,** as described herein. The number and arrangement of components shown are provided as an example. In some non-limiting embodiments or aspects, power supply system **300** may include additional components, fewer components, different components, or differently arranged components than those shown. Additionally or alternatively, a set of components (e.g., one or more components) of power supply system **300** may perform one or more functions described as being performed by another set of components of power supply system **300.** For example, in some non-limiting embodiments or aspects, choke **402** may be included in and/or a part of system controller **304.**

In some non-limiting embodiments or aspects, housing **302** may include plastic, metal, any combination thereof, and/or the like. For example, housing **302** may include a metal housing, such as an aluminum housing.

In some non-limiting embodiments or aspects, housing **302** may be configured to hold at least one (e.g., a plurality of) energy storage container(s) **200** and/or at least one (e.g., a plurality of) energy storage modules(s) **100.** For example, housing **302** may be configured to hold two energy storage containers **200,** three energy storage containers **200,** four energy storage containers **200,** and/or the like. For the purpose of illustration, housing **302** may be configured to hold two energy storage containers **200,** each of which may hold twelve energy storage modules(s) **100** (e.g., a total of 24 energy storage modules(s) **100**). For the purpose of illustration, housing **302** may be configured to hold three energy storage containers **200,** each of which may hold eight energy storage modules(s) **100** (e.g., a total of 24 energy storage modules(s) **100**). Other non-limiting configurations are also possible, e.g., housing **302** may hold four energy storage containers **200,** each of which may hold six energy storage modules(s) **100** (e.g., a total of 24 energy storage module(s) **100**). For the purpose of illustration, housing **302** may be configured to hold two energy storage containers **200,** each of which may hold three energy storage modules(s) **100** (e.g., a total of 6 energy storage modules(s) **100**). In some non-limiting embodiments or aspects, energy storage container(s) **200** and/or energy storage module(s) **100** may be in other arrangements within housing **302.**

In some non-limiting embodiments or aspects, housing **302** may include a plurality of compartments separated by dividers **302d** (e.g., walls, barriers, and/or the like). For example, the number of compartments may be equal to the number of energy storage container(s) **200** (e.g., a respective compartment for each respective energy storage container **200**). Each compartment may be separated from the adjacent compartment(s) by a divider **302d.** For example, one divider **302d** may separate an interior space of housing **302** into two compartments, two dividers **302d** may separate an interior space of housing **302** into three compartments, and so on. In some non-limiting embodiments or aspects, divider **302d** may be part of housing **302** and/or may include the same material as housing **302** (e.g., aluminum, metal, plastic, and/or the like).

In some non-limiting embodiments or aspects, as shown in FIG. 3B, housing **302** may include body **302a,** first end cap **302b,** second end cap **302c,** and/or at least one divider **302d.** In some non-limiting embodiments or aspects, body **302a** and/or divider **302d** may include a first material (e.g., metal, such as aluminum), and first end cap **302b** and/or second end cap **302c** may include a second material (e.g., plastic). In some non-limiting embodiments or aspects, at least one of first end cap **302b** and/or second end cap **302c** may include the same material as body **302a** and/or divider **302d.** In some non-limiting embodiments or aspects, first end cap **302b** and second end cap **302c** may be configured to (e.g., sized and shaped to) cover openings at respective ends of body **302a.**

In some non-limiting embodiments or aspects, first end cap **302b** and/or second end cap **302c** may include (and/or may have a space to accommodate) input connection **306,** output connection(s) **308,** and/or communication connection **310.** For the purpose of illustration, as shown in FIG. 3B, input connection **306** and communication connection **310** may be located at first end cap **302b,** and output connections **308** may be located at second end cap **302c.** In some non-limiting embodiments or aspects, input connection **306,** output connection(s) **308,** and/or communication connection **310** may be in other arrangements. For example, all of input connection **306,** output connection(s) **308,** and communication connection **310** may be located at the same end cap (e.g., one of first end cap **302b** or second end cap **302c**). As another example, input connection **306** may be located at one end cap, and communication connection **310** and output connection(s) **308** may be located at the other end cap. As another example, input connection **306** and output connection(s) **308** may be located at one end cap, and communication connection **310** may be located at the other end cap. As another example, first output connection **308-1** may be located at one end cap, and second output connection **308-2** may be located at the other end cap.

In some non-limiting embodiments or aspects, system controller **304** may include a controller and associated circuitry. For example, system controller **304** may include a microcontroller, a computing device, a processor, a microprocessor, a digital signal processor (DSP), and/or any processing component (e.g., a field-programmable gate array (FPGA), an application-specific integrated circuit (ASIC), etc.) that can be configured to perform at least one function. In some non-limiting embodiments or aspects, system controller **304** may be communicatively connected to energy storage module container **200** and/or energy storage module(s) **100** (e.g., module controller(s) **103** thereof) by communication connection **208.** In some non-limiting embodiments or aspects, system controller **304** may be electrically connected to energy storage module container **200** and/or energy storage module(s) **100** (e.g., energy storage component(s) **102** thereof) by electrical connection(s) **206.** In some non-limiting embodiments or aspects, choke **402** may be included in and/or a part of system controller **304.**

In some non-limiting embodiments or aspects, input connection **306** may include at least one connector (e.g., at least one standardized electrical plug connector, e.g., for mains electric power and/or electrical devices compatible therewith). In some non-limiting embodiments or aspects, each output connection **308** may include at least one connector (e.g., at least one standardized electrical plug connector, e.g., for mains electric power and/or electrical devices compatible therewith). For example, first output connection **308-1** may include a connector (e.g., standardized electrical plug connector) suitable for 100-127 V (e.g., at a frequency of 60 Hz suitable for the United States of America, North America, etc.). For example, second output connection **308-2** may include a connector (e.g., standardized electrical plug connector) suitable for 200-240 V (e.g., at a frequency of 50 Hz suitable for the European Union, etc.). In some non-limiting embodiments or aspects, communication connection **310** may include at least one connector (e.g., at least one standardized communication plug connector). For example, communication connection **310** may include at least one of a universal serial bus (USB) connector (e.g., USB-A, USB-B, USB-C, USB power delivery (USB-PD), mini-USB, micro-USB, and/or the like), an ethernet connector, a coaxial cable connector, a pin connector, a CAN-bus connector, any combination thereof, and/or the like.

In some non-limiting embodiments or aspects, choke **402** may be electrically connected (e.g., coupled and/or the like) to energy storage module container(s) **200** and/or energy storage module(s) **100,** as described herein. For example, a first energy storage module container **200** and/or a first set of energy storage modules **100** may be connected to a first connection (e.g., first end, first winding, and/or the like) of choke 402, as described herein. Additionally or alternatively, a second energy storage module container **200** and/or a second set of energy storage modules **100** may be connected to a second connection (e.g., second end, second winding, and/or the like) of choke **402,** as described herein.

In some non-limiting embodiments or aspects, system controller **304** may command module controller(s) **103** of energy storage module(s) **100** to generate an output voltage based on a combination (e.g., sum and/or the like) of the respective module voltage of each respective energy storage module **100,** as described herein. For example, by sequentially connecting multiple energy storage module(s) **100** in series in a time-shifted manner, a combined (e.g., summed) voltage may approximate an AC voltage waveform having a target amplitude (e.g., a voltage substantially equal to the nominal voltage of mains electric power, such as 100-127 V, 200-240 V, an/dor the like) and/or a target frequency (e.g., a frequency substantially equal to the nominal frequency of mains electric power, such as 60 Hz, 50 Hz, and/or the like), as described herein.

In some non-limiting embodiments or aspects, system controller **304** may command module controller(s) **103** of energy storage module(s) **100** to cause a respective duty cycle of a respective module voltage of each respective energy storage module **100** to generate an output voltage based on a combination (e.g., sum and/or the like) of the respective module voltage of each respective energy storage module **100,** as described herein. For example, by modulating the duty cycle differently for multiple energy storage module(s) **100** connected in series, a combined (e.g., summed) voltage may approximate (e.g., better approximate) an AC voltage waveform having a target amplitude and/or a target frequency, as described herein. In some non-limiting embodiments or aspects, the duty cycle of the respective module voltage may relate to a switched voltage scheme such as a pulse-width modulation (PWM) type waveform. For example, system controller **304** may command module controller(s) **103** of energy storage modules **100** to switch their output voltage with certain frequency and/or duty-cycle. The exact number or range of the switching frequency is not essential to the scope or generality of the teachings of the present disclosure. As some non-limiting examples, the switching frequency of the system may be in the kHz range (1 kHz to 999 kHz). For example, the switching frequency and/or PWM frequency of the system may be between 40 kHz and 100 kHz. In some cases, the switching frequency and/or PWM frequency of the system may be at or around 90 kHz. In some non-limiting embodiments or aspects, module output may be switching (e.g., PWM) at a frequency between 1.5 kHz to 7.5 kHz. For example, module output may be switching (e.g., PWM) at a frequency between 3.5 kHz to 4.5 kHz. As a further example, module output may be switching (e.g., PWM) at a frequency at or around 3.75 kHz. As another example, module output may be switching (e.g., PWM) at a frequency at or around 4 kHz. In some non-limiting embodiments or aspects, the switching frequency or PWM frequency of the system may be proportional to a multiplication of the switching frequency and/or PWM frequency of the energy storage module **100** and the number of energy storage modules **100**. It shall be appreciated that duty cycle may be anywhere between 0% and 100%, e.g., depending on the time at which the respective energy storage modules **100** are being operated. For example, 0% duty cycle for a given energy storage module **100** may mean that the energy storage module **100** is instructed to be deactivated or in a bypass mode (energy storage module **100** not contributing to the output voltage, but still able to carry current), and 100% duty cycle may mean that that energy storage module **100** is instructed to be switched on or activated in a given polarity. For example, by sweeping the duty cycle of a given energy storage module **100** over time (e.g., between 0% and 100%), the effective output voltage of that energy storage module **100** can be more finely incremented or decremented between voltage steps associated with full switching between two consecutive energy storage modules **100**. Various energy storage modules **100** may be orchestrated, e.g., by system controller **304**, to generate an output voltage based on a combination of the respective module voltage of each respective energy storage module **100**, as described herein.

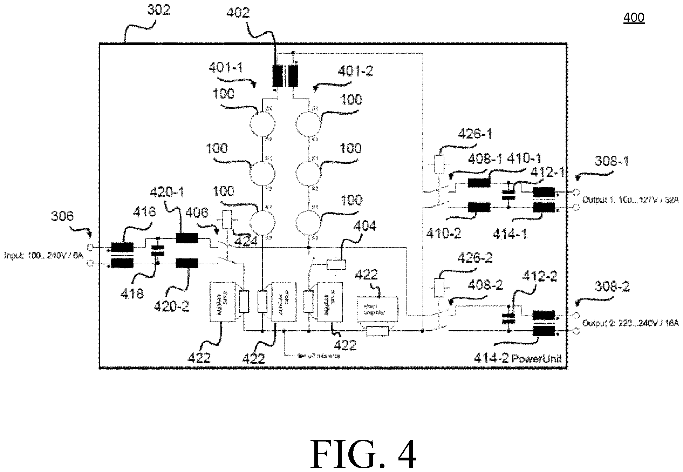

Referring now to FIG. 4, shown is a circuit diagram of an example power supply system **400**, according to some non-limiting embodiments or aspects. In some non-limiting embodiments or aspects, power supply system **400** may be the same as or similar to power supply system **300**. The number and arrangement of components shown are provided as an example. In some non-limiting embodiments or aspects, power supply system **400** may include additional components, fewer components, different components, or differently arranged components than those shown. Additionally or alternatively, a set of components (e.g., one or more components) of power supply system **400** may perform one or more functions described as being performed by another set of components of power supply system **400**.

In some non-limiting embodiments or aspects, as shown in FIG. 4, input connection **306** may be connected to input choke **416**. Input choke **416** may be connected to input capacitor **418** and/or at least one input inductor (e.g., first input inductor **420-1** and/or second input inductor **420-2**, collectively referred to as "input inductors **420**," and individually referred to as "input inductor **420**"). For example, input choke **416** may be provided for electromagnetic compatibility (EMC) reasons. Similarly, input capacitor **418** may be provided as an EMC capacitor (and/or class-X capacitor), which may stabilize the input voltage and/or make the input less impedant at higher frequencies. For example, input inductor(s) **420** may be used to operate the electrical system **400** in a controlled current mode.

In some non-limiting embodiments or aspects, first output connection **308-1** may be connected to first output choke **414-1**. First output choke **414-1** may be connected to at least one of capacitor **412-1** and/or inductors **410**.

In some non-limiting embodiments or aspects, second output connection **308-2** may be connected to second output choke **414-2**. Second output choke **414-2** may be connected to capacitor **412-2**.

In some non-limiting embodiments or aspects, each of the chokes (e.g., input choke **416**, first output choke **414-1**, and/or second output choke **414-2**) may be common-mode chokes and/or the like, e.g., used for EMC performance. It shall be appreciated that further discussion of EMC inductors or capacitors is not essential to the scope or generality of the present teachings.

In some non-limiting embodiments or aspects, input switch **424** may selectively connect and/or disconnect input **406** from first set **401-1** and second set **401-2** of energy storage modules **100**. In some non-limiting embodiments or aspects, to operate in a third mode of operation (e.g., a charging mode of operation) input switch **424** at input **406** may be switched to a first state (e.g., closed, activated, and/or the like). For example, switching input switch **424** to the first state (e.g., closed, activated, and/or the like) may allow current to flow from input connection **306** through input **406** to first set **401-1** and second set **401-2** of energy storage modules **100** (e.g., to charge energy storage modules **100**). In some non-limiting embodiments or aspects, a power source (e.g., mains electric power, generator power, renewable power (e.g., solar, wind, and/or the like), and/or the like) may be connected to input connection **306**. In some non-limiting embodiments or aspects, system controller **300** may control module controllers of energy storage modules **100** to charge energy storage components **102** thereof (e.g., based on power from the power source).

In some non-limiting embodiments or aspects, to discontinue the third mode of operation (e.g., stop charging) and/or to prevent current from flowing to input connection **306** when power supply system **400** is not in the third (e.g., charging) mode of operation, input switch **424** at input **406** may be switched to a second state (e.g., open, deactivated, and/or the like).

In some non-limiting embodiments or aspects, at least one output switching element (e.g., first output switch **426-1** and/or second output switch **426-1**, collectively referred to as "output switches **426**," and individually referred to as "output switch **426**") may selectively connect and/or disconnect outputs **408** from first set **401-1** and second set **401-2** of energy storage modules **100**.

In some non-limiting embodiments or aspects, to operate in the first mode of operation, in addition to switching of switch **404** to a first state (e.g., closed, activated and/or the like), first output switch **426-1** may be switched to a first state (e.g., closed, activated and/or the like). For example, this may allow current to flow from first set **401-1** and second set **401-2** of energy storage modules **100** through first output **408-1** (and inductors **410** and/or capacitor **412-1**) to first output connection **308-1** (e.g., to supply power to a load connected to first output connection **308**-1). In some non-limiting embodiments or aspects, to prevent current from flowing to first output connection **308-1** when power supply system **400** is not in the first mode of operation, first output switch **426-1** may be switched to a second state (e.g., opened, deactivated and/or the like).

In some non-limiting embodiments or aspects, to operate in the second mode of operation, in addition to switching of switch **404** to a second state (e.g., opened, deactivated and/or the like), second output switch **426-2** may be switched to a first state (e.g., closed, activated and/or the like). For example, this may allow current to flow from first set **401-1** and second set **401-2** of energy storage modules **100** through second output **408-2** (and capacitor **412-2**) to second output connection **308-2** (e.g., to supply power to a load connected to second output connection **308-2**). In some non-limiting embodiments or aspects, to prevent current from flowing to second output connection **308-2** when power supply system **400** is not in the second mode of operation, second output switch **426-2** may be switched to a second state (e.g., opened, deactivated and/or the like).

In some non-limiting embodiments, the first mode of operation and the second mode of operation may be used to provide multi-voltage operation via the power supply system **400**. For example, in the first mode of operation, the first set **401-1** and second set **401-2** of energy storage modules **100** may be connected in parallel, while in the second mode of operation, the first set **401-1** and second set **401-2** of energy storage modules **100** may be connected in series. It shall be appreciated that the first mode of operation may be provide an output voltage which is lower than the output voltage provided in the second mode of operation, however the output current provided in the first mode of operation may be larger than the output current provided in the second mode of operation. For example, the first mode of operation may provide an 110 V output, while the second mode of operation provides a 220 V output. This can advantageously allow the power supply system **400** for multi-voltage domain operation. For example, 110 V AC mains voltage domain is predominantly used in the US, while 220 V AC mains voltage domain is used in Europe. The power supply system **400** can thus allow flexibility in using electrical appliances rated for any of the voltage domains. A particular advantage of the shown configuration can be that output power can be similar or identical in either mode. For example, assuming identical sets **(401-1** and **401-2)** operating identically, output current in the first mode can be double of the output current in the second mode even though the output voltage in the first mode is half of the output voltage in the second mode. This can allow similar power levels to be used despite the voltage domain which the power supply system **400** output is operating in. The examples of 110 V and 220 V are non-limiting to the teachings as any voltage domain, or operating frequency can be realized with the present structure. Moreover, it is not limiting to have the two domains which are related by an integer factor to each other in terms of voltage and/or current. It shall be appreciated the operating cycle (e.g., order of plurality of modules) can be adapted according to the operating mode of the power supply system **400**.

In some non-limiting embodiments or aspects, each of input switch **424** and output switches **426** may include at least one of a switch, a contactor, a transistor, any combination thereof, and/or the like. For example, each of input switch **424** and output switches **426** may include at least one of an SPST switch, a DPDT switch, an SPDT switch, a DPST switch, any combination thereof, and/or the like. For example, each of input switch **424** and output switches **426** may include at least one of a DPDT switch or a DPST switch. For the purpose of illustration, as shown in FIG. 4, each of input switch **424** and output switches **426** may include a DPST switch or a DPDT switch.

In some non-limiting embodiments or aspects, power supply system **400** may include current sensors **422,** which may be in communication with system controller **304** (e.g., a microcontroller). In some non-limiting embodiments or aspects, each current sensor **422** may include a shunt amplifier. For example, each shunt amplifier may refer to a common potential (e.g., reference voltage), to which system controller **304** (e.g., a microcontroller) also may refer. In some non-limiting embodiments or aspects, at least some (e.g., all, a subset, and/or the like) of current sensors **422** may be any other suitable type of current sensor. For example, a current sensor **422** may include measuring voltage drop across a resistor connected in series (e.g., to at least one of first set **401-1** and/or second set **401-2** of energy storage modules **100**), e.g., to measure the current flowing through the resistor (and/or any component in series with the resistor). In some non-limiting embodiments or aspects, at least one current sensor **422** may be of a different type than another current sensor **422**. For example, a current sensor **422** connected to of first set **401-1** of energy storage modules **100** may be of a different type than another current sensor **422** connected to second set **401-2** of energy storage modules **100**.

In some non-limiting embodiments or aspects, by measuring current at locations of current sensors **422,** the following may be measured (e.g., by system controller **304** and/or the like): output current (e.g., in a redundant manner), input current (e.g., in a redundant manner), circular current (e.g., if strings are connected in parallel). In some non-limiting embodiments or aspects, current sensors may measure current flowing through each of first set **401-1** and second set **401-2** of energy storage modules **100**. As such, relative measurements may be performed to detect if a circular (e.g., loop) current is flowing between first set **401-1** and second set **401-2** of energy storage modules **100**. In other words, such relative measurements may be used to detect that the load current is divided evenly between the sets. Such measurements also may be used for orchestrating the operation of energy storage modules **100,** e.g., in such a manner that the circular (e.g., loop) current may be reduced (e.g., eliminated). Additionally or alternatively, such orchestration may also include disabling certain energy storage modules **100** in any of sets **401,** even if such disabling causes an unequal number of active energy storage modules **100** between the sets **401.** This may help running the system **400,** for example, even if energy storage modules **100** between sets **401** have different charge levels. Additionally or alternatively, such orchestration may include first module voltages of first set **401-1** being interleaved with second module voltages of second set **401-2.** Interleaving of the module voltages can be done by phase shifting output voltage of one set with respect to the output of the other set. Additionally or alternatively, such orchestration may include tolerating, or even in some non-limiting embodiments or aspects, creating, an imbalance in voltages between the first set **401-1** and the second set **401-2.** This may result in the loop current which tends to flow from one set **401** to the other set **401** to be a low frequency current which can be used, e.g., to equalize state of charge between the two sets **401.** Choke **402,** even in such non-limiting embodiments or aspects, may block the high frequency currents, but may allow low frequency or DC current to flow from the set **401** having a higher voltage than the other set **401.** As such, power supply system **400** may be more robust, flexible, and balanced. In some non-limiting embodiments or aspects, current sensors **422** may be leveraged for making absolute measurements, such as determining total current flowing through first set **401-1** and/or second set **401-2** of energy storage modules **100.** It shall be appreciated that said imbalance may be caused by unequal number of energy storage modules **100** operating in one set **401** as compared to the number of energy storage modules **100** operating in the other set **401.** Additionally or alternatively, the imbalance may be due to unequal charge level between the two sets **401.** Similarly, the power supply system **400** may also include circuit for voltage measurement in one or more networks of the power supply system **400.** It is neither essential nor limiting to the present disclosure to specify which voltage measurement circuit or scheme must be used.

The present solution provides a novel technique for controlling operations of the power supply system **300, 400** and energy storage modules **100.** The novel technique is less computationally and resource intensive than conventional solutions. The particulars of the novel technique will become evident as the discussion progresses. Still, it should be noted that the novel technique provides a way to compute an amount of energy the leaves the power supply system on its output or that comes into the power supply system in its input. Such a computation may be performed for the following reasons: the possibility of having a simple energy-based state of charge (SOC) calculation of energy storage modules inside the power supply system; and/or the possibility for detecting energy coming in through the output which may be dangerous because the internal energy storage modules are effectively charged while the power supply system is discharging. The energy storage module temperature limit for charging might be different than the limit for discharging. The charging current of the energy cells is controlled by the external power source which feeds current into the power supply system operating as a voltage source. This current might exceed a maximum allowed charging current of the energy cells.

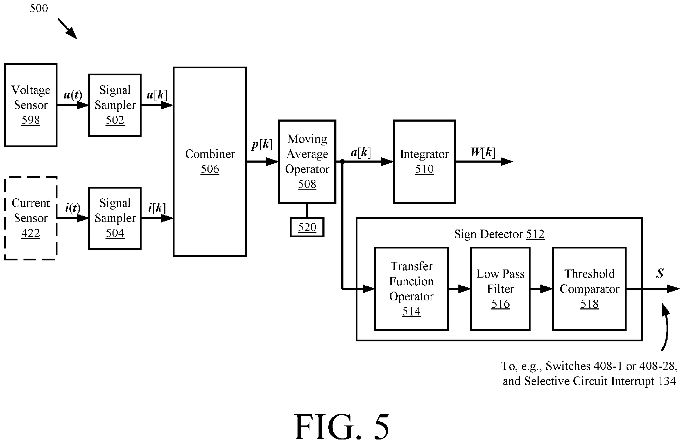

FIG. 5 provides a block diagram of a circuit **500** configured to control operations of a power supply system (e.g., power supply system **300** of FIG. 3 or **400** of FIG. 4). Circuit **500** can be implemented in hardware and/or software. Circuit **500** may form part of controller **103** of FIG. 1 or be separate from controller **103** of FIG. 1.

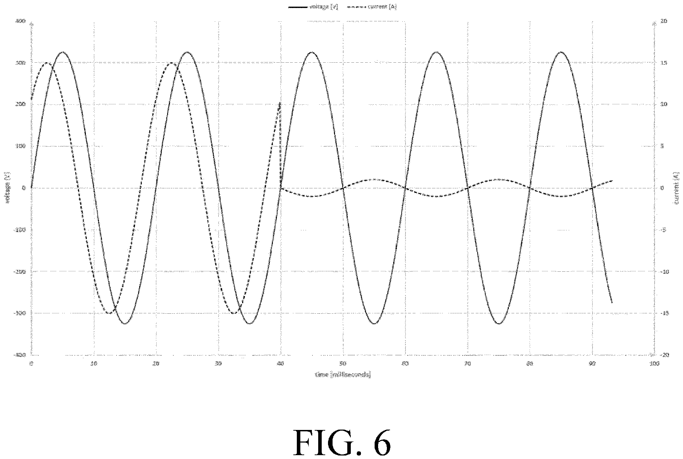

Circuit **500** comprises a signal sampler **502** connected to a voltage sensor **598** and another signal sampler **504** connected to a current sensor **422.** A graph is provided in FIG. 6 which shows an illustrative voltage signal provided to signal sampler **502** and an illustrative current signal provided to signal sampler **504.**

The signal samplers **502, 504** include, but are not limited to, analog-to-digital converters and/or optional filters. Optional filters may additionally or alternatively be included with the voltage and current sensors. The analog output of the voltage sensor is referred to as $u(t)$ and the digital output from signal sampler **502** is referred to as $u[k]$. $u(t)$ comprises a measured output voltage (e.g., **308-1** or **308-2** of FIG. 4) of the power supply system. The analog output from the current sensor is referred to as i(t), while the digital output from the signal sampler **504** is referred to $i[k]$. $i(t)$ comprises a measured input or output current of the power supply system depending on whether the power supply system is in the charging or discharging mode of operation. Both $u[k]$ and $i[k]$ can be written as a time series of samples. For example, the digital voltage output of signal sampler **502** can be expressed as a time sequence of samples $u[k_0], u[k_1], \ldots, u[k_N]$. The digital current output of signal sampler **504** can be expressed as a time sequence of samples $i[k_0], i[k_1], \ldots, i[k_N]$. $N$ is an integer.

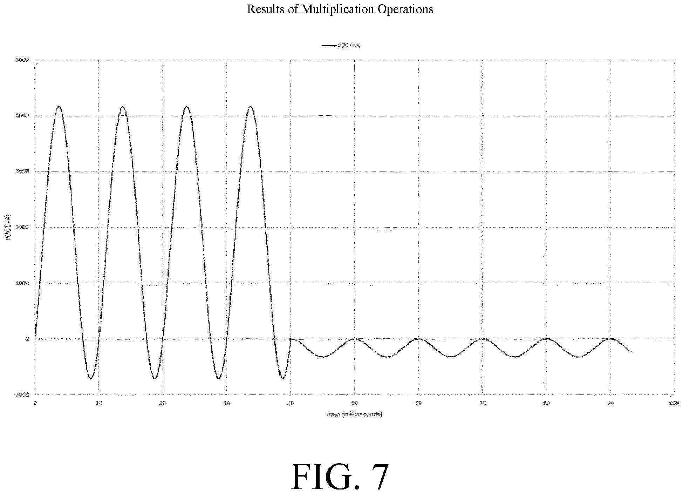

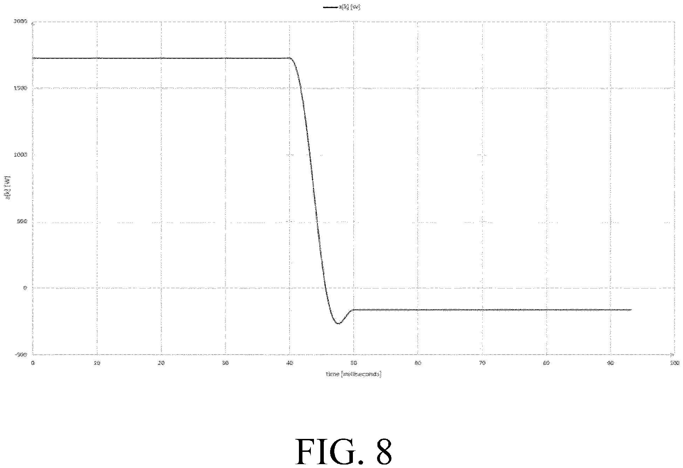

The voltage and current samples are passed to combiner **506.** Combiner **506** is configured to combine a voltage sample associated with a given time and a current sample associated with the same given time together to form a combined value *p[k].* A graph is provided in FIG. 7 which shows combined values plotted over time. The combined value *p[k]* contains active power, reactive power and deformed power. The present solution is concerned with active power since this is what effectively charges and discharges the energy cells **100.** The mean value of *p[k]* resembles the active power. Accordingly, *p[k]* is further processed by a moving average operator **508** to obtain a mean value *a[k]* resembling active power. A graph is provided in FIG. 8 which shows mean values plotted over time.

Combiner **506** can include, but is not limited to, a multiplier. In the multiplier scenarios, the combined value *p[k]* can be defined by the following mathematical equation (1).

$$p[k] = u[k] * i[k] \tag{1}$$

Mathematical equation (1) can be written as follows for a time series of voltage and current samples.

$$p[k_0] = u[k_0] * i[k_0]$$

$$p[k_1] = u[k_1] * i[k_1]$$

$$p[k_N] = u[k_N] * i[k_N]$$

wherein $p[k_0]$ represents a first power value or product from multiplying a voltage measurement value and a current measurement value at a time $t_0$, $p[k_1]$ represents a second power value or product from multiplying a voltage measurement value and a current measurement at a time $t_1$, and $p[k_N]$ represents a third power value or product from multiplying a voltage measurement value and a current measurement at a time $t_N$.

The combined value $p[k]$ is passed to moving average operator **508**. The moving average operator is generally configured to compute an average combined value over a specified period of time or sliding sample window having a defined size. The moving average operator **508** can include, but is not limited to, a finite impulse response (FIR) filter or other moving average filter.

The FIR filter may be configured to have a same value for all coefficients, whereby the FIR filter acts as a moving average filter for low pass filtering of the combined value $p[k]$. The FIR filter may also be configured to have a number of taps $N_{taps}$ selected such that the 100 Hz or 120 Hz fundamental and harmonic are canceled. If a 50 Hz sinusoidal voltage waveform is multiplied with a 50 Hz sinusoidal current waveform, then the result will be a sinusoidal 100 Hz power waveform. The idea is to select the number of taps in correlation to the sampling frequency in a way that the notches of the comb are at 100, 200, 300... or 120, 240, 360 ... Hz. For example, the FIR filter has 100 taps at 10 kHz execution rate for 50 Hz, or 83 taps at 10 kHz execution rate for 50 Hz. The present solution is not limited to the particulars of this example. The FIR filter can have any number of taps selected in accordance with a given application. The FIR filter is further configured to compute $a[k]$ using a current combined value $p[k]_{current}$ and previous combined values $p[k]_{previous}$. $a[k]$ may be defined by the following mathematical equation (2) written in discrete time notation.

$$a[k] = 1/N_{taps} * \sum_{n=0}^{N_{taps}-1} p[k-n] \tag{2}$$

In a digital system, the FIR filter can be implemented efficiently by storing the last $N_{taps}$-1 combined values in a datastore **520**. Per execution, the FIR filter subtracts the oldest combined value $p[k-(N_{taps}-1)]$ from the newest combined value $p[k]$ to obtain a difference value $d_k$, and then adds the difference value $d_k$ to a previous mean value $a[k-1]$. The newest combined value $p[k]$ is stored in the datastore **520** for a next computation of the mean value $a[k+1]$, and the oldest combined value $p[k-(N_{taps}-1)]$ is discarded or otherwise no longer stored in datastore **520**. Accordingly, mathematical equation (2) can be re-written as mathematical equation (3).

$$a[k] = a[k-1] + (p[k] - p[k-(N_{taps}-1)])(1/N_{taps}) = a[k-1] + d_k(1/N_{taps}) \tag{3}$$

The normalization using $1/N_{taps}$ is optional. It should be noted that mathematical equation (3) may be replaced with mathematical equation (4) in some scenarios.

$$a[k] = a[k-1] + (p[k] - p[k-(N_{taps}-1)]) = a[k-1] + d_k \tag{4}$$

As noted above, the FIR filter may be configured to have one hundred taps, i.e., $N_{taps}$ = 100. In this scenario, mathematical equations (2)-(4) can be re-written as shown below.

$$a[k] = 1/100 * \sum_{n=0}^{99} p[k-n]$$

$$a[k] = a[k-1] + (p[k] - p[k\text{-}99])(1/100)$$

$$a[k] = a[k-1] + (p[k] - p[k\text{-}99])$$

The present solution is not limited to the particulars of this scenario.

As shown in FIG. 5, the mean value $a[k]$ is passed from the moving average operator to an integrator **510** and a sign detector **512.** The integrator **510** is configured to integrate the input quantity $a[k]$ over an undefined time to produce a representative output $W[k]$. $W[k]$ represents a time integral of $a[k]$. $W[k]$ may be used, for example, to compute an SOC for energy storage module(s) (e.g., energy storage module **100** of FIG. 1). The SOC can then be used to open a switch and/or transition an operational mode of the power supply system.

The sign detector **512** is configured to generate a signal $S$ based on a sign of the mean value $a[k]$. The sign of $a[k]$ indicates whether the energy cells are being charged/discharged. A positive sign may indicate that the energy cells are being charged, while a negative sign may indicate that the energy cells are being discharged. Alternatively, a negative sign may indicate that the energy cells are being charged, while a positive sign may indicate that the energy cells are being discharged. When the sign of $a[k]$ indicates that the power supply system is not in a user-set discharging mode of operation, the sign detector **512** generates and outputs a signal $S$.

Signal $S$ may be provided to (i) prevent energy flowing to an output of the power supply system, and (ii) prevent energy from flowing to the energy cells of the energy storage module(s). These features can provide a means to obtain a fast shutdown reaction by the power supply system in scenarios, such as when a balcony power plant is connected thereto. Feature (i) may be achieved by using the signal S to cause switches (e.g., switches **408-1** or **408-2** of FIG. 4) at the output of the power supply system to transition from closed states to open states. Actuation of these switches results in the output power of the power supply system being turned "off". Feature (ii) may be achieved by using the signal $S$ to cause all energy storage modules to be turned "off' via the selective circuit interrupts (e.g., selective circuit interrupt **134** of FIG. 1). When the sign of $a[k]$ indicates that the energy storage modules of the power supply system are effectively discharged, the above-described process is repeated using the next voltage and current samples of the time series of samples.

The sign detector **512** can include, but is not limited to, a transfer function operator **514,** a low pass filter **516** and a threshold comparator **518**. In the scenarios in which a negative sign means that energy cells are being charged, the transfer function operator **514** is configured to replace all positive mean values with zero. The low pass filter **516** is configured to pass filtered negative mean values to the threshold comparator **518**. Each filtered negative mean value is compared to a threshold value. Signal $S$ is generated when a filtered negative mean value falls below the threshold value. For example, the threshold hold value is selected to be 10 or -10. Thus, signal $S$ is generated when the numerical value (absent the sign) of the filtered negative mean value is greater than 10 or the filtered negative mean value is equal to or less than -10. The present solution is not limited to the particulars of this example.

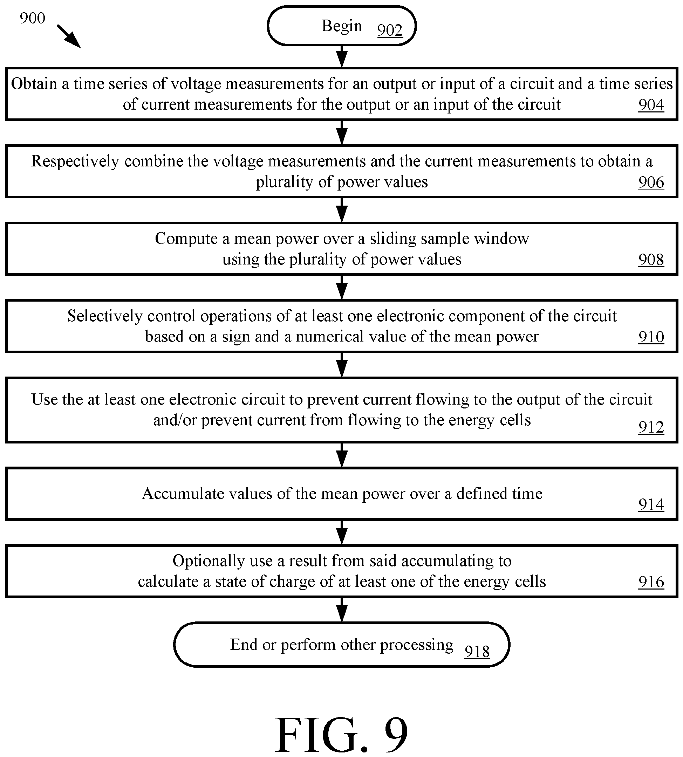

FIG. 9 provides a flow diagram of an illustrative method **900** for operating a circuit. The circuit can include, but is not limited to, a power supply system (e.g., power supply system **300** of FIG. 3 or **400** of FIG. 4), a controller (e.g., controller **103** of FIG. 1) and/or other circuit (e.g., circuit **500** of FIG. 5). Method **900** begins with **902** and continues with **904** where the circuit obtains a time series of voltage measurements for an output or input of the circuit and a time series of current measurements for the output or an input of the circuit. Next in **906,** the circuit performs operations to respectively combine the voltage measurements and the current measurements to obtain a plurality of power values.

The circuit computes a mean power over a sliding sample window using the power values, as shown by **908.** This computation can involve: computing a difference between a newest one of the power values in the sliding sample window and an oldest one of the power values in the sliding sample window, and adding the difference to a previous value for the mean power. This computation may also involve: computing a first mean power using a first sub-set of the power values at a first time; and computing a second mean power using a different second sub-set of the power values at a second time. The mean power may be computed using an FIR filter. The FIR filter may have a same value for all coefficients, may be configured to have a number of taps such that fundamental and harmonic frequencies of the power signal are canceled, and may be configured to compute the mean value using both a current power value and a previous power value.

Block **910** involves selectively controlling operations of electronic component(es) (e.g., switch(es) **408-1** and/or **408-1** of FIG. 4 and/or selective circuit interrupt **134** of FIG. 1) based on a sign and a numerical value of the mean power. The output may be connected to an energy consumer. In this case, block **910** may involve using the electronic component(s) to prevent energy flowing from the energy consumer to the output. The electronic component(s) can include, but are not limited to, switch(es) and selective circuit interrupt(s). Block **910** can additionally or alternatively involve: determining whether power supply system is or is not in a user-set discharging mode based on the sign of the mean value; and causing the electronic component to transition from closed state(s) to open state(s). The state of the electronic component can be transitioned, for example, when (i) a sign of the mean value indicates that the power supply system is not in the user-set discharge mode of operation and (ii) the numerical value of the mean value exceeds a threshold value.

In next block **912,** the electronic component(s) is(are) used to (i) prevent current flowing to the output of the circuit and/or (ii) prevent current from flowing to the energy cells.

In block **914,** operations are performed to accumulate values of the mean power over a defined time. The accumulation result may be used in **916** to calculate a state of charge of at least one of the energy cells. Subsequently, method **900** continues to block **918** where it ends or other operations are performed. The other operations can include, but are not limited to, returning to block **902.**

Although the present solution has been illustrated and described with respect to one or more implementations, equivalent alterations and modifications will occur to others skilled in the art upon the reading and understanding of this specification and the annexed drawings. In addition, while a particular feature of the present solution may have been disclosed with respect to only one of several implementations, such feature may be combined with one or more other features of the other implementations as may be desired and advantageous for any given or particular application. Thus, the breadth and scope of the present solution should not be limited by any of the above described scenarios. Rather, the scope of the present solution should be defined in accordance with the following claims and their equivalents.

Without excluding further possible embodiments, certain example embodiments are summarized in the following clauses:

Clause 1: A method for operating a circuit, comprising: obtaining a time series of voltage measurements for an output of the circuit and a time series of current measurements for the output or an input of the circuit; respectively combining the voltage measurements and the current measurements to obtain a plurality of power values; computing a mean power over a sliding sample window using the plurality of power values; and selectively controlling operations of at least one electronic component of the circuit based on a sign and a numerical value of the mean power.

Clause 2: The method of Clause 1, wherein the output is connected to an energy consumer and/or energy generator, and wherein the method further comprises using the at least one electronic component to prevent energy flowing from the energy consumer to the output.

Clause 3: The method of any of the preceding clauses, wherein the circuit comprises a power supply system and the at least one electronic component comprises a switch or a selective circuit interrupt, and wherein the method further comprises using the at least one electronic component to concurrently (i) prevent energy flowing to the output of the power supply system and (ii) prevent energy from flowing to energy cells.

Clause 4: The method of any of the preceding clauses, wherein the circuit comprises a power supply system, and the at least one electronic component comprises a switch or a selective circuit interrupt.

Clause 5: The method of any of the preceding clauses, wherein the selectively controlling operations of the at least one electronic component comprises causing the switch or selective circuit interrupt to transition from a closed state to an open state.

Clause 6: The method of any of the preceding clauses, wherein said computing the mean power comprises: computing a first mean power using a first sub-set of the plurality of power values at a first time; and computing a second mean power using a different second sub-set of the plurality of power values at a second time.

Clause 7: The method of any of the preceding clauses, wherein the mean power is computed using a finite impulse response filter.

Clause 8: The method of any of the preceding clauses, wherein said computing the mean power comprises computing a difference between a newest one of the plurality of power values in the sliding sample window and an oldest one of the plurality of power values in the sliding sample window, and adding the difference to a previous value for the mean power.

Clause 9: The method of any of the preceding clauses, wherein the selectively controlling operations of at least one electronic component comprises verifying that a user is using the device in a way the user intends and/or determining whether the circuit is in a user-set discharging mode of operation based on the sign of the mean value.

Clause 10: The method of any of the preceding clauses, wherein the selectively controlling operations of at least one electronic component comprises causing the at least one electronic component to transition from a closed state to an open state when (i) a sign of the mean value indicates that the circuit is not in the user-set discharging mode of operation and (ii) the numerical value of the mean value exceeds a threshold value.

Clause 11: The method of any of the preceding clauses, further comprising accumulating values of the mean power over a defined time and using a result from said accumulating to calculate a state of charge of at least one of the energy cells.

Clause 12: A power supply or power supply system, comprising: at least one electronic component configured to selectively transition between an open state and a closed state; and a circuit configured to perform the following operations: obtaining a time series of voltage measurements for an output of the power supply and a time series of current measurements for the output or an input of the power supply; respectively combining the voltage measurements and the current measurements to obtain a plurality of power values; computing a mean power over a sliding sample window using the plurality of power values; and selectively controlling operations of the at least one electronic component based on a sign and a numerical value of the mean power.

Clause 13: The power supply according to Clause 12, wherein the at least one electronic component comprises a switch or a selective circuit interrupt.

Clause 14: The power supply any of the preceding clauses, wherein the operations of the at least one electronic component are selectively controlled to cause the switch or selective circuit interrupt to transition from a closed state to an open state.

Clause 15: The power supply any of the preceding clauses, wherein the mean power is computed by: computing a first mean power using a first sub-set of the plurality of power values at a first time; and computing a second mean power using a different second sub-set of the plurality of power values at a second time.

Clause 16: The power supply any of the preceding clauses, wherein the circuit comprises a finite impulse response filter configured to compute the mean power.

Clause 17: The power supply any of the preceding clauses, wherein the finite impulse response filter has a same value for all coefficients, is configured to have a number of taps such that fundamental and harmonic frequencies of a power signal are canceled, and is configured to compute the mean value using both a current power value and a previous power value.

Clause 18: The power supply any of the preceding clauses, wherein the mean power or active power is computed by computing a difference between a newest one of the plurality of power values in the sliding sample window and an oldest one of the plurality of power values in the sliding sample window, and adding the difference to a previous value for the mean power.

Clause 19: The power supply any of the preceding clauses, wherein the operations of at least one electronic component are controlled based on whether a sign of the mean value verifies that a user is using the device in a way the user intends and/or indicates that the power supply is not in a user-set discharging mode of operation.

Clause 20: The power supply any of the preceding clauses, wherein the operations of at least one electronic component are controlled to cause the at least one electronic component to transition from a closed state to an open state when (i) a sign of the mean value indicates that the power supply is not in the user-set discharging mode of operation and (ii) the numerical value of the mean value exceeds a threshold value.

Clause 21: The power supply any of the preceding clauses, further comprising an integrator configured to integrate values of the mean power over an undefined time, wherein an output from said integrator is used to calculate a state of charge of at least one of the energy cells.

Clause 22: A system (e.g., a circuit, power supply or an arrangement) comprising means for performing the steps of any of the preceding method clauses.

Clause 23: A software product comprising instructions which when executed by one or more suitable processors (e.g.,

those of a system such as a power supply) cause any of the processors to perform the steps of any of the above method clauses.

Clause 24: A software product comprising instructions which when executed by a system comprising suitable means, causes the system to perform the steps of any of the preceding method clauses.

The breadth and scope of this disclosure should not be limited by any of the above-described example embodiments, but should be defined only in accordance with the following claims and their equivalents.

**Claims**

1.   A method for operating a circuit, comprising:

   obtaining a time series of voltage measurements for an output of the circuit and a time series of current measurements for the output of the circuit;
   respectively combining the voltage measurements and the current measurements to obtain a plurality of power values;
   computing a mean power over a sliding sample window using the plurality of power values; and
   selectively controlling operations of at least one electronic component of the circuit based on a sign and a numerical value of the mean power.

2.   The method according to claim 1, wherein the output is connected to an energy consumer, and wherein the method further comprises using the at least one electronic component to prevent current flowing from the energy consumer to the output.

3.   The method according to claim 1, wherein the circuit comprises a power supply and the at least one electronic component comprises a switch or a selective circuit interrupt, and wherein the method further comprises using the at least one electronic component to concurrently (i) prevent current flowing to the output of the power supply and (ii) prevent current from flowing to energy cells.

4.   The method according to claim 1, wherein the circuit comprises a power supply, and the at least one electronic component comprises a switch or a selective circuit interrupt.

5.   The method according to claim 4, wherein the selectively controlling operations of the at least one electronic component comprises causing the switch or selective circuit interrupt to transition from a closed state to an open state.

6.   The method according to claim 1, wherein said computing the mean power comprises:

   computing a first mean power using a first sub-set of the plurality of power values at a first time; and
   computing a second mean power using a different second sub-set of the plurality of power values at a second time.

7.   The method according to claim 1, wherein the mean power is computed using a finite impulse response filter.

8.   The method according to claim 1, wherein said computing the mean power comprises computing a difference between a newest one of the plurality of power values in the sliding sample window and an oldest one of the plurality of power values in the sliding sample window, and adding the difference to a previous value for the mean power.

9.   The method according to claim 1, wherein the selectively controlling operations of at least one electronic component comprises verifying that a user is using the device in a way the user intends.

10.   The method according to claim 1, wherein the selectively controlling operations of at least one electronic component comprises causing the at least one electronic component to transition from a closed state to an open state when (i) a sign of the mean value indicates that the circuit is not in the user-set discharging mode of operation and (ii) the numerical value of the mean value exceeds a threshold value.

11.   The method according to claim 1, further comprising accumulating values of the mean power over a defined time and

# EP 4 625 751 A1

using a result from said accumulating to calculate a state of charge of at least one of the energy cells.

12. A power supply, comprising:

at least one electronic component configured to selectively transition between an open state and a closed state; and
a circuit configured to perform the following operations:

obtaining a time series of voltage measurements for an output of the power supply and a time series of current measurements for the output of the power supply;
respectively combining the voltage measurements and the current measurements to obtain a plurality of power values;
computing a mean power over a sliding sample window using the plurality of power values; and
selectively controlling operations of the at least one electronic component based on a sign and a numerical value of the mean power.

13. The power supply according to claim 11, wherein the at least one electronic component comprises a switch or a selective circuit interrupt.

14. A system comprising means for performing the steps of any of the preceding method claims.

15. A software product comprising instructions which when executed by a system comprising suitable means, causes the system to perform the steps of any of the preceding method claims.

FIG. 1A

Circuit
120

FIG. 1B

FIG. 1C

100

Power Out
Interface
151

Control Bus
Interface
152

Top
Cover
155

101

Bottom
Cover
157

# FIG. 1D

FIG. 1E

FIG. 2A

200

202

202a

202b

FIG. 2B

FIG. 2C

FIG. 3A

FIG. 3B

FIG. 4

500

Voltage Sensor 598 → $u(t)$ → Signal Sampler 502 → $u[k]$ → Combiner 506

Current Sensor 422 → $i(t)$ → Signal Sampler 504 → $i[k]$ → Combiner 506

Combiner 506 → $p[k]$ → Moving Average Operator 508 → $a[k]$ → Integrator 510 → $W[k]$ →

520

Moving Average Operator 508 → Sign Detector 512

Sign Detector 512: Transfer Function Operator 514 → Low Pass Filter 516 → Threshold Comparator 518 → $S$ →

To, e.g., Switches 408-1 or 408-28, and Selective Circuit Interrupt 134

FIG. 5

30

FIG. 6

Results of Multiplication Operations

FIG. 7

FIG. 8

900

Begin 902

Obtain a time series of voltage measurements for an output or input of a circuit and a time series of current measurements for the output or an input of the circuit        904

Respectively combine the voltage measurements and the current measurements to obtain a plurality of power values        906

Compute a mean power over a sliding sample window using the plurality of power values        908

Selectively control operations of at least one electronic component of the circuit based on a sign and a numerical value of the mean power        910

Use the at least one electronic circuit to prevent current flowing to the output of the circuit and/or prevent current from flowing to the energy cells        912

Accumulate values of the mean power over a defined time        914

Optionally use a result from said accumulating to calculate a state of charge of at least one of the energy cells        916

End or perform other processing 918

FIG. 9

## EUROPEAN SEARCH REPORT

Europäisches
Patentamt
European
Patent Office
Office européen
des brevets

**Application Number**

EP 24 16 6246

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/093000 A1 (EKSTRÖM MARKUS [SE]) 23 March 2023 (2023-03-23) * paragraph [0065] - paragraph [0190]; figures 3a-28 * | 1-15 | INV. H02J7/00 |
| X | US 2023/016562 A1 (MAARBJERG ANDERS EGGERT [DK] ET AL) 19 January 2023 (2023-01-19) * the whole document * | 1-15 | |
| A | US 2011/198936 A1 (GRAOVAC DUSAN [DE] ET AL) 18 August 2011 (2011-08-18) * the whole document * | 1-15 | |
| A | US 3 867 643 A (BAKER RICHARD H ET AL) 18 February 1975 (1975-02-18) * the whole document * | 1-15 | |
| A | US 5 642 275 A (PENG FANG ZHENG [US] ET AL) 24 June 1997 (1997-06-24) * the whole document * | 1-15 | |

**TECHNICAL FIELDS SEARCHED (IPC)**

H02J
G01R
B60L
H02M

The present search report has been drawn up for all claims

| Place of search | Date of completion of the search | Examiner |
|---|---|---|
| Munich | 20 September 2024 | Hunckler, José |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 24 16 6246

This annex lists the patent family members relating to the patent documents cited in the above-mentioned European search report.
The members are as contained in the European Patent Office EDP file on
The European Patent Office is in no way liable for these particulars which are merely given for the purpose of information.

20-09-2024

| Patent document cited in search report | Publication date | Patent family member(s) | Publication date |
|---|---|---|---|
| US 2023093000 A1 | 23-03-2023 | NONE | |
| US 2023016562 A1 | 19-01-2023 | CN 114846716 A | 02-08-2022 |
| | | DK 201970833 A1 | 28-07-2021 |
| | | EP 4082092 A1 | 02-11-2022 |
| | | US 2023016562 A1 | 19-01-2023 |
| | | WO 2021129911 A1 | 01-07-2021 |
| US 2011198936 A1 | 18-08-2011 | CN 102263524 A | 30-11-2011 |
| | | DE 102011004248 A1 | 18-08-2011 |
| | | US 2011198936 A1 | 18-08-2011 |
| | | US 2013127251 A1 | 23-05-2013 |
| US 3867643 A | 18-02-1975 | DE 2500275 A1 | 24-07-1975 |
| | | FR 2258041 A1 | 08-08-1975 |
| | | JP S50107422 A | 23-08-1975 |
| | | US 3867643 A | 18-02-1975 |
| US 5642275 A | 24-06-1997 | US 5642275 A | 24-06-1997 |
| | | US RE37126 E | 03-04-2001 |

EPO FORM P0459

For more details about this annex : see Official Journal of the European Patent Office, No. 12/82

**REFERENCES CITED IN THE DESCRIPTION**

**Patent documents cited in the description**

- US 20220037891
- US 20220247030
- US 20220359918
- US 20220360094